# EUROPÄISCHE PATENTSCHRIFT

(11) **EP 4 193 416 B1**
(45) Veröffentlichungstag und Bekanntmachung des Hinweises auf die Patenterteilung: **05.06.2024**
(21) Anmeldenummer: 21745887.6
(22) Anmeldetag: 21.07.2021
(51) Int. Cl.: H01M 10/61, H01M 10/643, H01M 10/6566, H01M 10/6568, H01M 50/213, H01M 10/617, H01M 10/6557

(54) **TEMPERIERVORRICHTUNG FÜR EINZELNE, ZU EINEM MODUL ZUSAMMENGESETZTE BATTERIEZELLEN**
TEMPERATURE-CONTROL DEVICE FOR INDIVIDUAL BATTERY CELLS COMBINED TO FORM A MODULE
DISPOSITIF DE RÉGULATION DE TEMPÉRATURE DESTINÉ À DES CELLULES DE BATTERIE INDIVIDUELLES COMBINÉES POUR FORMER UN MODULE

(30) Priorität: 10.08.2020 AT 506682020
(43) Veröffentlichungstag der Anmeldung: 14.06.2023
(73) Patentinhaber: John Deere Electric Powertrain LLC, Moline, IL 61265 (US)
(72) Erfinder: KASTLER, Helmut, 4240 Freistadt (AT); KREISEL, Philipp, 4240 Freistadt (AT)
(74) Vertreter: Hübscher & Partner Patentanwälte GmbH
(86) Internationale Anmeldenummer: PCT/AT2021/060256
(87) Internationale Veröffentlichungsnummer: WO 2022/032315

(56) Entgegenhaltungen:
- AT-A1- 520 409
- AT-B1- 520 409
- KR-B1- 100 667 943

## Beschreibung

### Technisches Gebiet

Die Erfindung bezieht sich auf eine Temperiervorrichtung für einzelne, zu einem Modul zusammengesetzte Batteriezellen, mit einem Grundkörper, der zum umfangsseitigen Umschließen der Batteriezellen bezüglich je einer Fügeachse paarweise gegenüberliegende Durchtrittsöffnungen aufweist und einen quer zu den Fügeachsen verlaufenden Strömungskanal für ein Temperierfluid bildet.

### Stand der Technik

Aus der AT520920 ist eine Temperiervorrichtung für einzelne, zu einem Modul zusammengesetzte Batteriezellen bekannt. Die Temperiervorrichtung weist hierzu einen zweiteilig ausgebildeten Grundkörper auf, der zum umfangsseitigen Umschließen der Batteriezellen bezüglich je einer Fügeachse paarweise gegenüberliegende Durchtrittsöffnungen ausbildet. Der Grundkörper begrenzt gemeinsam mit den Batteriezellen einen Strömungskanal für ein Temperierfluid, das die Batteriezellen quer zu ihren Fügeachsen direkt anströmt. Zwar ist die Abdichtung zwischen den Batteriezellen und den Durchtrittsöffnungen bei dem erforderlichen Betriebsdruck des Temperierfluids technisch aufwendig, allerdings kann durch die mantelseitige beinahe vollständige Umströmung der Batteriezellen ohne zwischenliegende Kühlleitungen eine gleichmäßig gute Temperierung der einzelnen Batteriezellen erfolgen. Nachteilig daran ist allerdings, dass das Temperierfluid in Strömungsrichtung nach und nach erwärmt wird, sodass die Kühlleistung in Strömungsrichtung abnimmt. Dies hat zur Folge, dass vor allem bei Modulen mit vielen Batteriezellen eine Temperaturspreizung zwischen den temperierfluideinlassseitg angeordneten und den temperierfluidauslassseitig angeordneten Batteriezellen entsteht. Solche Temperaturunterschiede führen zum einen zu einer verminderten Leistungseffizienz als auch zu einer beschleunigten Alterung der Batteriemodule.

Um alle Batteriezellen innerhalb eines Moduls mit einer nahezu gleichen Kühlleistung zu beaufschlagen, weist die aus der DE102013225521A1 bekannte Temperiervorrichtung zwei quer zur Längsachse der Batteriezellen verlaufende Kühlleitungen auf, wobei beide Kühlleitungen mit jeder zu kühlenden Batteriezelle zur Wärmeübertragung kontaktiert sind. Die Strömungsrichtungen der in den Kühlleitungen verlaufenden Temperierfluid können zueinander gegensinnig sein. Dadurch wird zwar eine geringere Temperaturspreizung innerhalb des Moduls erreicht, jedoch sind die einzelnen Batteriezellen selbst einer erhöhten thermischen Belastung ausgesetzt, da ein Wärmeaustausch zwischen dem Temperierfluid und den Batteriezellen nur über die Kontaktstellen der Kühlleitungen mit den Batteriezellen erfolgen kann. Dies hat nicht nur eine geringere Kühlleistung, sondern auch eine inhomogene Kühlung der einzelnen Batteriezellen zur Folge, was zu einer beschleunigten Alterung der Batteriezelle und einer geringeren möglichen elektrischen Belastung führt.

Aus der AT520409B1 ist eine Temperiervorrichtung gemäß dem Oberbegriff bekannt.

### Darstellung der Erfindung

Der Erfindung liegt somit die Aufgabe zugrunde, eine Temperiervorrichtung der eingangs geschilderten Art vorzuschlagen, die eine verringerte Temperaturspreizung innerhalb eines Batteriemoduls bei gleichzeitig guter homogener Temperierung der einzelnen Batteriezellen des Batteriemoduls ermöglicht.

Die Erfindung löst die gestellte Aufgabe dadurch, dass der Strömungskanal durch eine quer zu den Fügeachsen verlaufende und Durchtrittsöffnungen für die Batteriezellen aufweisenden Membran in wenigstens zwei Kammern getrennt ist. Der Erfindung liegt die Erkenntnis zugrunde, dass gerade bei zylindrischen Batteriezellen die Wärmeübertragung in Längs- bzw. Fügerichtung deutlich besser als quer dazu erfolgt, was durch den schichtförmigen Aufbau des gewickelten Zellkerns begründet ist. Zufolge der erfindungsgemäßen Merkmale wird jede Batteriezelle entlang ihrer Fügeachse in allen Kammern vom Temperierfluid umströmt, wobei das Temperierfluid in wenigstens einer ersten Gruppe von Kammern gegensinnig zum Temperierfluid in einer zweiten Gruppe von Kammern strömt. Im einfachsten Fall können zwei Kammern, nämlich eine Zulaufkammer und eine Rücklaufkammer vorgesehen sein, die durch die Membran voneinander getrennt werden. Es können aber auch mehrere Membranen vorgesehen sein, die den Strömungskanal in mehrere Kammern trennen. In diesem Fall können die außenliegenden Kammern, die jeweils nur von einer Membran begrenzt werden, die Zulaufkammer und die Rücklaufkammer bilden. Besonders günstige Temperierbedingungen ergeben sich, wenn die Strömungsrichtungen des Temperierfluids zweier benachbarter Kammern zueinander entgegengesetzt sind. Der Temperaturunterschied zwischen dem jeweils zulaufenden und dem rücklaufenden Temperierfluid wird durch die gute Wärmeübertragung innerhalb der Batteriezelle in Richtung ihrer Fügeachse ausgeglichen. Darüber hinaus kann die Membran aufgrund der geringen Druckunterschiede zwischen den einzelnen Kammern und der damit verbundenen geringen mechanischen Belastung dünn gehalten werden, sodass der im Bereich der Durchtrittsöffnungen liegende, nicht umspülte Bereich des jeweiligen Batteriezellenmantels klein bleibt. Somit wird einerseits die Temperaturspreizung innerhalb einer Temperiervorrichtung minimiert und andererseits eine gute homogene Temperierung der einzelnen Batteriezellen erreicht. Dadurch, dass bereits der Grundkörper eine entsprechende Abdichtung für das Temperierfluid im Strömungskanal aufweisen muss, wird durch die zusätzliche Membran hinsichtlich dieser Abdichtung kein Mehraufwand verursacht.

Weil der Druckunterschied zwischen den Kammern im Gegensatz zum Druckunterschied zwischen Strömungskanal und Grundkörperaußenseite vergleichsweise gering ist, bestehen an die Abdichtung der Kammern durch die Membran verhältnismäßig geringe Anforderungen. Der Druckunterschied zwischen Strömungskanal und Grundkörperaußenseite kann bei typischen Anwendungen der Erfindung mehr als das Zehnfache des Druckunterschieds zwischen den Kammern ausmachen. So können die Durchtrittsöffnungen des Grundkörpers mit einer Grundkörperdichtung versehen sein, die einer höheren Druckdifferenz standhält, als die an den Durchtrittsöffnungen der Membran angeordneten Membrandichtungen. Während die Grundkörperdichtungen üblicherweise Ringdichtungen mit verhältnismäßig großer Flächenpressung bzw. Kombinationen aus mehreren hintereinanderliegenden Dichtungen sind, können die Membrandichtungen einfache Dichtlippen ausbilden, die in einer besonders einfachen Ausführungsform durch die Membran selbst gebildet werden.

Die Membran kann mit Ausnahme der Durchtrittsöffnung für die Batteriezellen geschlossen sein, wenn für die Kammern gesonderte Ein- und Auslässe vorgesehen sind. Um den Abdichtungsaufwand weiter zu reduzieren, wird vorgeschlagen, dass die Membran eine die wenigstens zwei Kammern verbindende Strömungsöffnung aufweist. Je nach Positionierung der Ein- und Auslässe und der Strömungsöffnung können somit in den einzelnen Kammern unterschiedliche Strömungsrichtungen und damit unterschiedliche Temperaturverhältnisse geschaffen werden.

Um mehrere Temperiervorrichtungen in einfacher Weise verbinden zu können, wird vorgeschlagen, dass der Grundkörper einen mit einer Zulaufkammer strömungsverbundenen Einlass und einen mit einer Rücklaufkammer strömungsverbundenen Auslass aufweist. Als Zulaufkammer wird grundsätzlich im Rahmen dieser Erfindung eine Kammer verstanden, in der das Temperierfluid im Vergleich zur Rücklaufkammer eine geringere Temperaturdifferenz zu einer vorgegebenen Solltemperatur aufweist. Dementsprechend ist die Zulaufkammer zulaufseitig und die Rücklaufkammer rücklaufseitig angeordnet. In diesem Zusammenhang sind unterschiedliche Ausführungsformen möglich, die im Folgenden näher beschrieben werden.

Im Falle einer einzelnen Temperiervorrichtung oder als Abschluss für mehrere, seriell hintereinandergeschaltete Temperiervorrichtungen kann die Membran eine die Zulauf- und die Rücklaufkammer verbindende Strömungsöffnung aufweisen, die vom Ein- und Auslass des Grundkörpers quer zu den Fügeachsen beabstandet ist. Demzufolge strömt das über den Einlass eintretende Temperierfluid durch die Zulaufkammer in einer ersten Strömungsrichtung, tritt durch die Strömungsöffnung in der Membran hindurch in die Rücklaufkammer ein und strömt dort entgegen der ersten Strömungsrichtung zum Auslass zurück. Ein- und Auslass liegen sich zu diesem Zweck bezüglich der Membran gegenüber und können vorzugsweise auf einer gemeinsamen zu den Fügeachsen parallelen Achse liegen. Die Strömungsöffnung der Membran kann auf der in der ersten Strömungsrichtung dem Ein- bzw. Auslass gegenüberliegenden Seite des Grundkörpers vorgesehen sein.

In einer besonders bevorzugten Ausführungsform kann der Grundkörper wenigstens zwei Einlässe aufweisen, die wenigstens zwei Auslässen in Richtung der Fügeachsen, also bezüglich der Membran gegenüberliegen. Dies bedeutet, dass jeweils wenigstens zwei Auslässe bzw. zwei Einlässe auf der bezüglich der Membran gleichen Seite des Grundkörpers angeordnet sind. Auf diese Weise kommt es in der Zulauf- und in der Rücklaufkammer zu einer Ausbildung von zwei zueinander entgegengesetzten Strömungsrichtungen, nämlich jeweils von einem Einlass zur in diesem Fall vorzugsweise mittig in der Membran angeordneten Strömungsöffnung und weiter zu den wenigstens zwei einander gegenüberliegenden Auslässen. Somit werden beide sich jeweils von der Strömungsöffnung zu den Ein- und Auslässen ausbildenden Temperiervorrichtungshälften im Gegenstrom temperiert, nämlich einlassseitig in der Zulaufkammer vom jeweiligen Einlass zur Strömungsöffnung und auslassseitig in der Rücklaufkammer von der Strömungsöffnung zum jeweiligen Auslass.

Um mehrere Temperiervorrichtungen in besonders vorteilhafter Weise miteinander zu verbinden, wird vorgeschlagen, dass ein Einlass und ein Auslass sowohl in Richtung der Fügeachsen als auch quer zur Richtung der Fügeachsen, also bezüglich der Membran auf der gleichen Seite des Grundkörpers angeordnet sind. Auf diese Weise können zwei benachbarte Temperiervorrichtungen über nur eine Verbindungsstelle, nämlich im Bereich der nebeneinander angeordneten Ein- und Auslässe miteinander strömungsverbunden werden. In einer bevorzugten Ausführungsform verläuft der Ein- und Auslass einer Temperiervorrichtung in Richtung der Fügeachsen und befindet sich auf der Durchtrittsöffnungen für die Batteriezellen aufweisenden Seite des Grundkörpers. In diesem Fall muss für eine gegensinnige Anströmung der Batteriezellen in einer Zu- und Rücklaufkammer entweder der Ein- oder der Auslass eine der Kammern durchsetzen, um eine Strömungsverbindung mit der jeweils anderen Kammer herzustellen.

Um eine noch kompaktere Bauweise für die Verbindungsstelle zu erzielen, können Ein- und Auslass je ein Anschlussstück bilden, wobei das eine Anschlussstück durch das andere Anschlussstück verläuft. Um dabei übereinstimmende Strömungsgeschwindigkeiten zu erreichen, wird vorgeschlagen, dass der freie Querschnitt der beiden Anschlussstücke betragsmäßig übereinstimmt. Soll eine Temperiervorrichtungen mit weiteren Temperiervorrichtungen verbunden werden, so können diese jeweils zwei dieser im Sinne eines Doppelrohres ausgeführten Anschlüsse aufweisen, wobei diese Anschlüsse sowohl in Richtung der Fügeachsen als auch quer zur Richtung der Fügeachsen auf der jeweils anderen Seite des Grundkörpers angeordnet sind. Um eine Temperaturspreizung innerhalb mehrerer so miteinander verbundenen Temperiervorrichtungen zu verhindern, kann bei einem Anschluss das Anschlussstück des Einlasses durch das Anschlussstück des Auslasses verlaufen und beim anderen Anschluss das Anschlussstück des Auslasses durch das Anschlussstück des Einlasses verlaufen.

Um ein einfaches Assemblieren der Temperiervorrichtung zu ermöglichen, wird vorgeschlagen, dass der Grundkörper zwei einander in Richtung der Fügeachsen gegenüberliegende Dichtelemente umfasst und dass wenigstens eines der Dichtelemente in den Strömungskanal vorragende Haltestifte für die Membran aufweist. Der Grundkörper ist demnach zweiteilig aufgebaut. Auf diese Weise können die Dichtelemente unter Zwischenlage einer oder mehrerer von Abstandhalter getrennter Membranen zusammengesetzt werden, wonach die Batteriezellen durch die jeweiligen Durchtrittsöffnungen der Dichtelemente bzw. Membran geführt werden können. Um die Membran sowohl bei diesem Fügeprozess, als auch während des Betriebs der Temperiervorrichtung zu stützen, weist wenigstens ein Dichtelement in den Strömungskanal vorragende Haltestifte auf, auf denen die Membran aufliegt. Vorzugsweise ragen von beiden Dichtelemente Haltestifte vor, zwischen denen die Membran geführt ist.

Damit durch die Stützung der Membran gleichzeitig eine Verbesserung der Wärmeübertragung zwischen Temperierfluid und Batteriezellen ermöglicht wird, können die Haltestifte Strömungsteiler für das Temperierfluid bilden. Zufolge dieser Maßnahme wird ein frühzeitiges Ablösen des Temperierfluids vom Batteriezellenmantel und somit eine die Wärmeübertragung in negativer Weise beeinflussende Totwasserbildung verhindert.

### Kurze Beschreibung der Erfindung

In der Zeichnung ist der Erfindungsgegenstand beispielsweise dargestellt. Es zeigen
- Fig. 1: einen abgerissenen Schnitt durch eine erfindungsgemäße Temperiervorrichtung,
- Fig. 2: eine schematische Anordnung mehrere Temperiervorrichtungen in einer ersten Ausführungsform,
- Fig. 3: eine schematische Anordnung mehrere Temperiervorrichtungen in einer zweiten Ausführungsform und
- Fig. 4: eine schematische Anordnung mehrere Temperiervorrichtungen in einer dritten Ausführungsform.

### Wege zur Ausführung der Erfindung

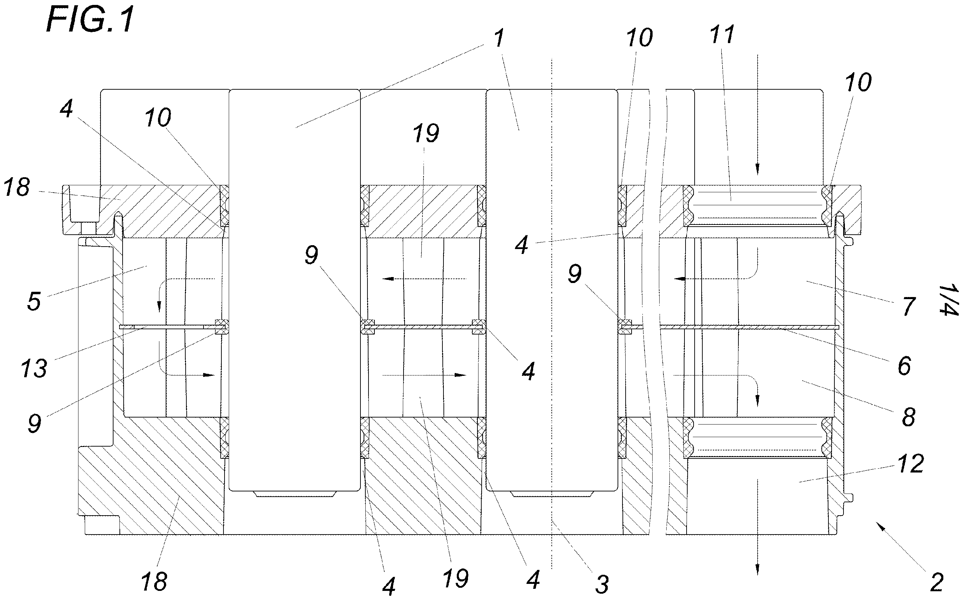

Eine erfindungsgemäße Temperiervorrichtung für einzelne, zu einem Modul zusammengesetzte Batteriezellen 1 weist, wie insbesondere der Fig. 1 zu entnehmen ist, einen Grundkörper 2 auf. Der Grundkörper 2 umfasst zum umfangsseitigen Umschließen der Batteriezellen 1 bezüglich je einer Fügeachse 3 paarweise gegenüberliegende Durchtrittsöffnungen 4 und begrenzt gemeinsam mit den Batteriezellen 1 einen quer zu den Fügeachsen 3 verlaufenden Strömungskanal 5 für ein Temperierfluid. Um eine geringe Temperaturspreizung zwischen den zu einem Modul zusammengesetzten Batteriezellen 1 zu bedingen und gleichzeitig eine homogene Temperierung der einzelnen Batteriezellen 1 zu ermöglichen, weist der Strömungskanal 5 eine quer zu den Fügeachsen 3 der Batteriezellen 1 verlaufende Membran 6 auf, welche den Strömungskanal in mehrere Kammern 7, 8, beispielsweise in eine Zulaufkammer 7 und eine Rücklaufkammer 8, trennt und in der Durchtrittsöffnungen 4 für die Batteriezellen 1 vorgesehen sind. Die Strömungsrichtung des in der jeweiligen Zulauf- 7 bzw. der Rücklaufkammer 8 fließende Temperierfluids sind gegensinnig zueinander. Zufolge dieser Maßnahme wird jede Batteriezelle 1 sowohl vom Temperierfluid in der Zulaufkammer 7 als auch vom Temperierfluid in der Rücklaufkammer 8 umströmt. Da die Temperatur des Temperierfluids im Falle einer Kühlung in Strömungsrichtung zunimmt und die Strömung in den Zulauf- 7 bzw. der Rücklaufkammer 8 gegensinnig zueinander verlaufen, wird jede Batteriezelle 1 mit einer nahezu gleichen Kühlleistung beaufschlagt, die dem Mittelwert der Kühlleistung der Zulauf- 7 bzw. der Rücklaufkammer 8 entspricht.

Grundsätzlich ist der Druckunterschied zwischen Grundkörperaußenseite und Strömungskanal 5 größer als der Druckunterschied zwischen Zulauf- 7 bzw. Rücklaufkammer 8. Dies hat zur Folge, dass die Membrandichtungen 9 einer geringeren Druckdifferenz standhalten müssen, als die Grundkörperdichtungen 10. Die Membrandichtungen 9 können somit eine einfache Dichtlippe umfassen, während für die Grundkörper 2 Doppelringdichtungen mit verhältnismäßig großer Flächenpressung vorgesehen sein können.

Mehrere Temperiervorrichtungen können miteinander verbunden werden, wenn der Grundkörper 2 einen mit der Zulaufkammer 7 strömungsverbundenen Einlass 11 und einen mit der Rücklaufkammer 8 strömungsverbundenen Auslass 12 aufweist.

Wie der Fig. 1 weiter zu entnehmen ist, kann die Membran 6 eine Strömungsöffnung 13 aufweisen, welche die Zulaufkammer 7 mit der Rücklaufkammer 8 strömungsverbindet. Durch Zulauf- 7 bzw. Rücklaufkammer 8 strömt demnach dasselbe Temperierfluid, das über den Einlass 11 durch die Zulaufkammer 7 in einer ersten Strömungsrichtung strömt, durch die Strömungsöffnung 13 in der Membran 6 hindurch in die Rücklaufkammer 8 eintritt und dort entgegen der ersten Strömungsrichtung zum Auslass 12 zurückströmt. Dadurch, dass die Strömungsöffnung 13 vom Einlass 11 und Auslass 12 quer zu den Fügeachsen 3 beabstandet ist, wird dem Temperierfluid ein gewünschter Strömungsverlauf vorgegeben. Die Strömungsöffnung 13 kann beispielsweise gemäß der Fig. 1 an der dem Ein- 11 bzw. Auslass 12 gegenüberliegenden Seite des Grundkörpers 2 vorgesehen sein.

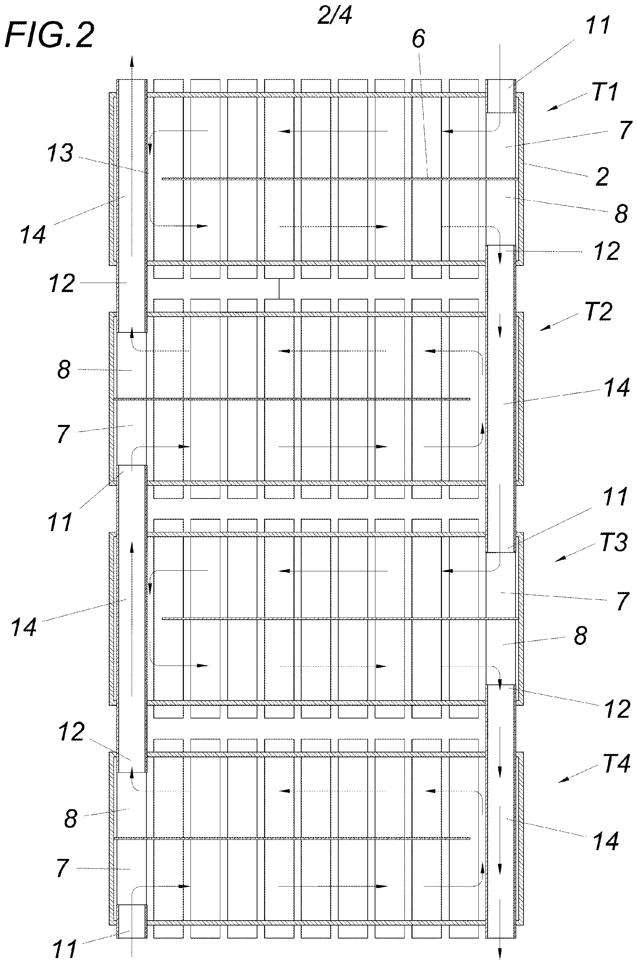

Die Fig. 2 zeigt die schematische Anordnung mehrerer erfindungsgemäßen Temperiervorrichtungen in einer ersten Ausführungsform. Dabei wird der Auslass 12 einer ersten Temperiervorrichtung T1 über ein durch die nachfolgende Temperiervorrichtung T2 verlaufendes Verbindungsrohr 14 mit dem Einlass 11 der übernächsten dritten Temperiervorrichtung T3 unter Ausbildung eines ersten Temperierkreislaufs verbunden. Ein zweiter Temperierkreislauf ergibt sich in analoger Weise, wenn der Auslass 12 der Temperiervorrichtung T4 über ein die Temperiervorrichtung T3 durchsetzendes Verbindungsrohr 14 mit dem Einlass 11 der Temperiervorrichtung T2 verbunden ist.

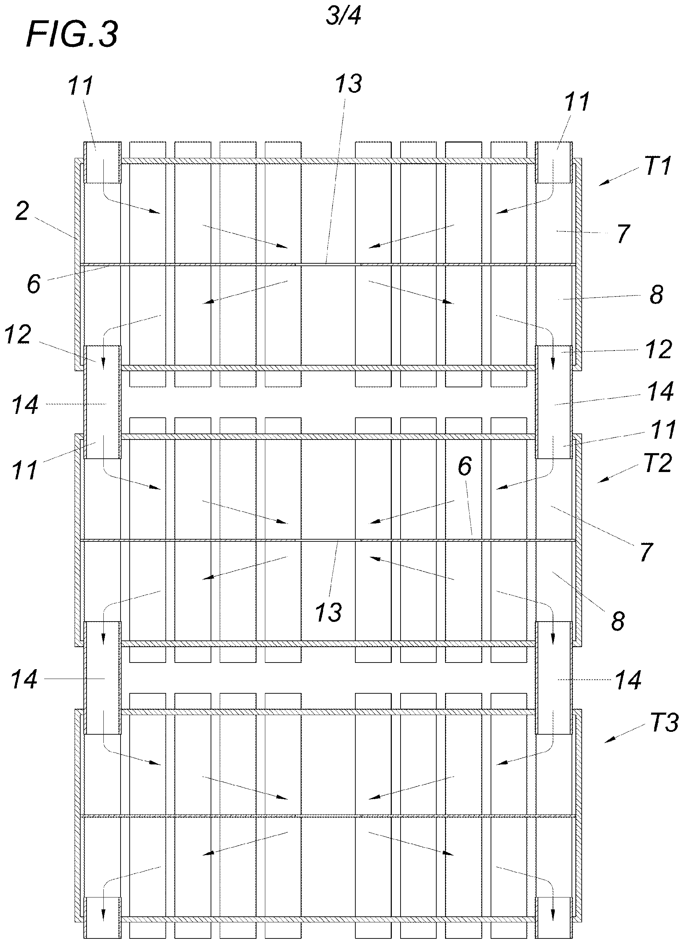

Fig. 3 zeigt eine zweite Ausführungsform der erfindungsgemäßen Temperiervorrichtung, bei der der Grundkörper 2 zwei Einlässe 11 und zwei Auslässe 12 aufweisen kann. Einlass 11 und Auslass 12 liegen sich in Richtung der Fügeachsen 3 bzw. bezüglich der Membran 6 gegenüber. Besonders günstige Strömungsverhältnisse ergeben sich dabei, wenn die Strömungsöffnung 13 mittig in der Membran 6 angeordnet ist. Zwei aufeinanderfolgende Temperiervorrichtungen dieser Ausführungsform werden miteinander verbunden, in dem die auf der gemeinsamen Seite der Membran 6 liegenden Auslässe 12 einer ersten Temperiervorrichtung T1 mit den Einlässen 11 der daran anschließenden Temperiervorrichtung T2 über Verbindungsrohre 14 strömungsverbunden werden. Zufolge dieser Maßnahme kommt es in der Zulaufkammer 7 und in der Rücklaufkammer 8 zu einer Ausbildung von zwei zueinander entgegengesetzten Strömungsrichtungen, wodurch sich zwei jeweils unabhängig voneinander mit dem Gegenstromprinzip temperierbare Temperiervorrichtungshälften ergeben. Dies kann beispielsweise dann von Vorteil sein, wenn zu einem Modul zusammengesetzte Batteriezellen 1 einer ungleichmäßigen Temperaturbelastung von der Grundkörperaußenseite ausgesetzt sind. Wie aus der Fig. 3 ersichtlich ist, kann auch die zweite Ausführungsform der Temperiervorrichtung mit weiteren Temperiervorrichtungen verschaltet sein.

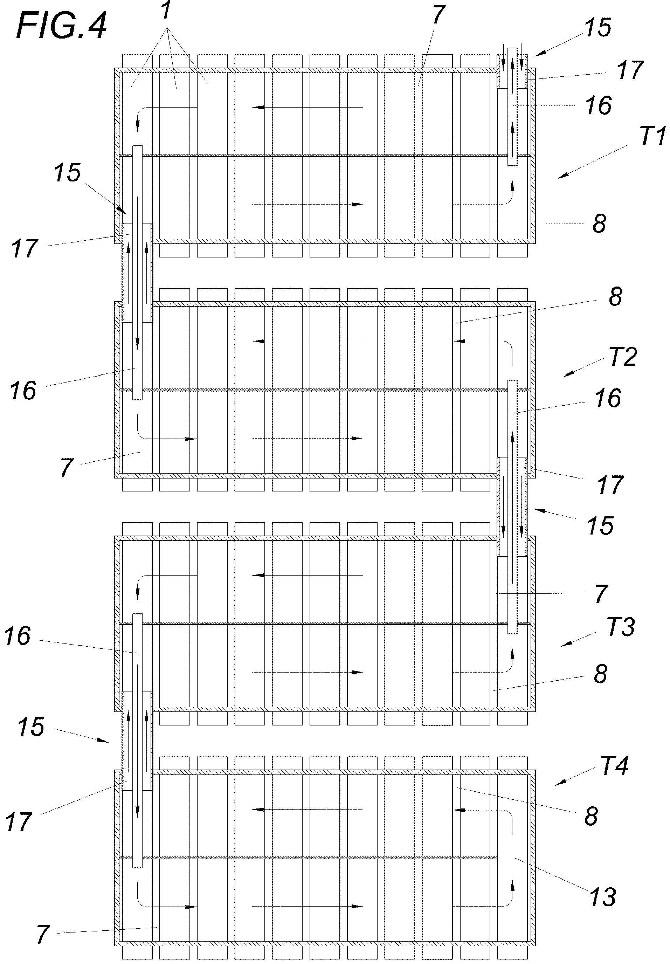

Fig. 4 zeigt eine weitere Ausführungsform der erfindungsgemäßen Temperiervorrichtung, bei der Einlass 11 und Auslass 12 auf der gleichen Seite des Grundkörpers 2, nämlich sowohl auf der gleichen Seite in Richtung der Fügeachse 3, als auch auf der gleichen Seite quer zur Richtung der Fügeachsen 3 angeordnet sind. Bevorzugterweise befinden sich Ein- und Auslass 11, 12 auf der Durchtrittsöffnungen 4 aufweisenden Seite des Grundkörpers 2. Auf diese Weise können zwei benachbarte Temperiervorrichtungen über nur eine Verbindungsstelle, umfassend einen Ein- und Auslass 11, 12, miteinander strömungsverbunden werden. Der Anschluss 15 für Ein- und Auslass 11, 12 umfasst dabei zwei Anschlussstücke 16, 17, von denen eines das andere durchsetzen kann. Wie in der Fig. 4 dargestellt, verbindet ein inneres Anschlussstück 16 die Zulaufkammer 7 einer ersten Temperiervorrichtung T1 mit der Zulaufkammer 7 einer zweiten Temperiervorrichtung T2, während ein äußeres Anschlussstück 17 die Rücklaufkammer 8 der Temperiervorrichtung T2 mit der Rücklaufkammer 8 der Temperiervorrichtung T1 verbindet. Das äußere Anschlussstück 17 umschließt dabei das innere Anschlussstück 16, das umgekehrt das äußere Anschlussstück 17 durchsetzt. Die Anschlussstücke 16, 17 können bei dieser Ausführungsform aber auch nebeneinander angeordnet werden. Um bei dieser Ausführungsform den Zulaufzweig mit dem Rücklaufzweig zu verbinden, kann eine abschließende Temperiervorrichtung T4 nur einen Anschluss 15 als Verbindungsstelle aufweisen, während die Membran 6 der Temperiervorrichtung T4 eine die Zulaufkammer 7 mit der Rücklaufkammer 8 verbindende Strömungsöffnung 13 aufweist. Dem gegenüber sind die Zu- und Rücklaufkammern 7, 8 der vorrangehenden Temperiervorrichtung T1 - T3 nicht über eine Strömungsöffnung 13 miteinander strömungsverbunden. Auf diese Weise kann eine Temperaturspreizung auch zwischen mehreren nacheinander geschalteten Temperiervorrichtungen reduziert werden.

Wie aus der Fig. 1 ersichtlich ist, kann der Grundkörper 2 zwei Dichtelemente 18 umfassen, welche einander in Richtung der Fügeachsen 3 gegenüberliegen. Wenigstens eines der Dichtelemente 18 kann in den Strömungskanal 5 vorragende Haltestifte 19 aufweisen, welche die Membran 6 stützen. Es können auch beide Dichtelemente 18 Haltestifte 19 aufweisen, sodass die Membran 6 zwischen diesen geklemmt werden kann.

Die Haltestifte 19 können Strömungsteiler für das Temperierfluid bilden, um optimale Anströmungsverhältnisse der Batteriezellen einstellen zu können.

## Patentansprüche

1. Temperiervorrichtung für einzelne, zu einem Modul zusammengesetzte Batteriezellen (1), mit einem Grundkörper (2), der zum umfangsseitigen Umschließen der Batteriezellen (1) in Richtung einer Fügeachse (3) paarweise gegenüberliegende Durchtrittsöffnungen (4) aufweist und einen quer zu den Fügeachsen (3) verlaufenden Strömungskanal (5) für ein Temperierfluid bildet, **dadurch gekennzeichnet, dass** der Strömungskanal (5) durch eine quer zu den Fügeachsen (3) verlaufende und Durchtrittsöffnungen (4) für die Batteriezellen (1) aufweisenden Membran (6) in wenigstens zwei Kammern (7, 8) getrennt ist.

2. Temperiervorrichtung nach Anspruch 1, **dadurch gekennzeichnet, dass** die Durchtrittsöffnungen (4) des Grundkörpers (2) mit einer Grundkörperdichtung (10) versehen sind, die einer höheren Druckdifferenz standhält, als die an den Durchtrittsöffnungen (4) der Membran (6) angeordneten Membrandichtungen (9).

3. Temperiervorrichtung nach Anspruch 1 oder 2, **dadurch gekennzeichnet, dass** die Membran (6) eine die wenigstens zwei Kammern (7, 8) verbindende Strömungsöffnung (13) aufweist.

4. Temperiervorrichtung nach einem der Ansprüche 1 bis 3, **dadurch gekennzeichnet, dass** der Grundkörper (2) einen mit einer Zulaufkammer (7) strömungsverbundenen Einlass (11) und einen mit einer Rücklaufkammer (8) strömungsverbundenen Auslass (12) aufweist.

5. Temperiervorrichtung nach Anspruch 4, **dadurch gekennzeichnet, dass** die Membran (6) eine die Zulauf- (7) und die Rücklaufkammer (8) verbindende Strömungsöffnung (13) aufweist, die vom Ein- (11) und Auslass (12) des Grundkörpers (2) quer zu den Fügeachsen (3) beabstandet ist.

6. Temperiervorrichtung nach Anspruch 5, **dadurch gekennzeichnet, dass** der Grundkörper (2) wenigstens zwei Einlässe (11) aufweist, die wenigstens zwei Auslässen (12) in Richtung der Fügeachsen (3) gegenüberliegen.

7. Temperiervorrichtung nach Anspruch 4, **dadurch gekennzeichnet, dass** ein Einlass (11) und ein Auslass (12) sowohl in Richtung der Fügeachsen (3) als auch quer zur Richtung der Fügeachsen (3) auf der gleichen Seite des Grundkörpers (2) angeordnet sind.

8. Temperiervorrichtung nach Anspruch 7, **dadurch gekennzeichnet, dass** Ein- (11) und Auslass (12) je ein Anschlussstück (16, 17) bilden, wobei das eine Anschlussstück (16) durch das andere Anschlussstück (17) verläuft.

9. Temperiervorrichtung nach einem der Ansprüche 1 bis 8, **dadurch gekennzeichnet, dass** der Grundkörper (2) zwei einander in Richtung der Fügeachsen (3) gegenüberliegende Dichtelemente (18) umfasst und dass wenigstens eines der Dichtelemente (18) in den Strömungskanal (5) vorragende Haltestifte (19) für die Membran (6) aufweist.

10. Temperiervorrichtung nach Anspruch 9, **dadurch gekennzeichnet, dass** die Haltestifte (16) Strömungsteiler für das Temperierfluid bilden.

## Claims

1. Temperature-control device for individual battery cells (1) combined to form a module, having a main body (2) which, in order to circumferentially surround the battery cells (1), has passage openings (4) situated opposite one another in pairs in the direction of a joining axis (3) and forms a flow channel (5), extending transversely with respect to the joining axes (3), for a temperature-control fluid, **characterized in that** the flow channel (5) is divided into at least two chambers (7, 8) by a membrane (6) which extends transversely with respect to the joining axes (3) and which has passage openings (4) for the battery cells (1).

2. Temperature-control device according to claim 1, **characterized in that** the passage openings (4) of the main body (2) are provided with a main body seal (10) which withstands a higher pressure difference than the membrane seals (9) arranged at the passage openings (4) of the membrane (6).

3. Temperature-control device according to claim 1 or 2, **characterized in that** the membrane (6) has a flow opening (13) connecting the at least two chambers (7, 8).

4. Temperature-control device according to one of claims 1 to 3, **characterized in that** the main body (2) has an inlet (11) flow-connected to an inlet chamber (7) and an outlet (12) flow-connected to a return chamber (8).

5. Temperature-control device according to claim 4, **characterized in that** the membrane (6) has a flow opening (13) connecting the inlet chamber (7) and the return chamber (8), which flow opening (13) is spaced from the inlet (11) and outlet (12) of the main body (2) transversely to the joining axes (3).

6. Temperature-control device according to claim 5, **characterized in that** the main body (2) has at least two inlets (11) which are opposite at least two outlets (12) in the direction of the joining axes (3).

7. Temperature-control device according to claim 4, **characterized in that** an inlet (11) and an outlet (12) are arranged both in the direction of the joining axes (3) and transversely to the direction of the joining axes (3) on the same side of the main body (2).

8. Temperature-control device according to claim 7, **characterized in that** the inlet (11) and outlet (12) each form a connection piece (16, 17), wherein one connection piece (16) passes through the other connection piece (17).

9. Temperature-control device according to one of claims 1 to 8, **characterized in that** the main body (2) comprises two sealing elements (18) lying opposite one another in the direction of the joining axes (3), and **in that** at least one of the sealing elements (18) has retaining pins (19) for the membrane (6) projecting into the flow channel (5).

10. Temperature-control device according to claim 9, **characterized in that** the retaining pins (19) form flow dividers for the temperature-control fluid.

## Revendications

1. Dispositif de régulation de température destiné à des cellules de batterie individuelles (1) combinées entre elles en un module, comprenant un corps de base (2) qui, pour entourer de façon circonférentielle les cellules de batterie (1), présente des ouvertures de passage (4) situées à l'opposé l'une de l'autre par paires par rapport à un axe d'assemblage respectif (3) et forme un canal d'écoulement (5) pour un fluide de régulation de température, le canal d'écoulement (5) s'étendant transversalement aux axes d'assemblage (3), **caractérisé en ce que** le canal d'écoulement (5) est divisé en au moins deux chambres (7, 8) par une membrane (6) s'étendant transversalement aux axes d'assemblage (3) et présentant des ouvertures de passage (4) pour les cellules de batterie (1).

2. Dispositif de régulation de température selon la revendication 1, **caractérisé en ce que** les ouvertures de passage (4) du corps de base (2) sont pourvues d'un joint de corps de base (10) qui résiste à une différence de pression plus élevée que les joints de membrane (9) qui sont agencés sur les ouvertures de passage (4) de la membrane (6).

3. Dispositif de régulation de température selon la revendication 1 ou 2, **caractérisé en ce que** la membrane (6) présente une ouverture d'écoulement (13) reliant les au moins deux chambres (7, 8).

4. Dispositif de régulation de température selon l'une quelconque des revendications 1 à 3, **caractérisé en ce que** le corps de base (2) présente une entrée (11) en communication fluidique avec une chambre d'alimentation (7) et une sortie (12) en communication fluidique avec une chambre de retour (8).

5. Dispositif de régulation de température selon la revendication 4, **caractérisé en ce que** la membrane (6) présente une ouverture d'écoulement (13) reliant la chambre d'alimentation (7) et la chambre de retour (8) et qui est espacée de l'entrée (11) et de la sortie (12) du corps de base (2) transversalement aux axes d'assemblage (3).

6. Dispositif de régulation de température selon la revendication 5, **caractérisé en ce que** le corps de base (2) présente au moins deux entrées (11) qui sont opposées à au moins deux sorties (12) dans la direction des axes d'assemblage (3).

7. Dispositif de régulation de température selon la revendication 4, **caractérisé en ce qu'**une entrée (11) et une sortie (12) sont disposées sur le même côté du corps de base (2), aussi bien dans la direction des axes d'assemblage (3) que transversalement à la direction des axes d'assemblage (3).

8. Dispositif de régulation de température selon la revendication 7, **caractérisé en ce que** l'entrée (11) et la sortie (12) forment chacune une pièce de raccordement (16, 17), dans lequel une première pièce de raccordement (16) s'étend à travers l'autre pièce de raccordement (17).

9. Dispositif de régulation de température selon l'une quelconque des revendications 1 à 8, **caractérisé en ce que** le corps de base (2) comprend deux éléments d'étanchéité (18) opposés l'un à l'autre dans la direction des axes d'assemblage (3), et **en ce qu'**au moins l'un desdits éléments d'étanchéité (18) comprend des tiges de retenue (19) pour la membrane (6) qui font saillie dans le canal d'écoulement (5).

10. Dispositif de régulation de température selon la revendication 9, **caractérisé en ce que** les tiges de retenue (19) forment des diviseurs d'écoulement pour le fluide de régulation de température.
